# EUROPÄISCHE PATENTSCHRIFT

(11) **EP 2 918 329 B1**
(45) Veröffentlichungstag und Bekanntmachung des Hinweises auf die Patenterteilung: **02.08.2017**
(21) Anmeldenummer: 15162207.3
(22) Anmeldetag: 18.04.2009
(51) Int. Cl.: B01D 53/94, F01N 3/20, B01J 29/04

(54) **ANORDNUNG UND VERFAHREN ZUR VERMINDERUNG VON STICKOXIDEN IN KOHLENWASSERSTOFF-HALTIGEN ABGASEN UNTER VERWENDUNG EINES SCR-KATALYSATORS AUF BASIS EINES MOLEKULARSIEBES**
DEVICE AND METHOD FOR REDUCING NITROGEN OXIDES IN HYDROCARBON-CONTAINING WASTE GAS STREAMS USING AN SCR CATALYTIC CONVERTER ON THE BASIS OF A MOLECULAR FILTER
DISPOSITIF ET PROCÉDÉ DE RÉDUCTION D'OXYDE D'AZOTE DANS DES GAZ D'ÉCHAPPEMENT CONTENANT DES HYDROCARBURES À L'AIDE D'UN CATALYSEUR RÉDUCTEUR CATALYTIQUE SÉLECTIF DOTÉ D'UN TAMIS MOLÉCULAIRE

(30) Priorität: 07.05.2008 EP 08008572
(43) Veröffentlichungstag der Anmeldung: 16.09.2015
(62) Teilanmeldung aus: 09741807.3
(73) Patentinhaber: UMICORE AG & CO. KG, 63457 Hanau-Wolfgang (DE)
(72) Erfinder: Seyler, Michael, 63814 Mainaschaff (DE); Soeger, Nicola, 61130 Nidderau (DE); Adelmann, Katja, 63452 Hanau (DE); Jeske, Gerald, 63543 Neuberg (DE)

(56) Entgegenhaltungen:
- WO-A1-2005/016497
- WO-A1-2008/106519
- WO-A2-2008/132452
- DE-A1- 3 635 284
- DE-A1-102004 013 165
- DE-A1-102005 059 250
- GB-A- 1 393 053
- US-A1- 2006 029 535

## Beschreibung

Die Erfindung betrifft eine Anordnung zur Verminderung von Stickoxiden im Abgas von überwiegend mager betriebenen Verbrennungsmotoren. Insbesondere betrifft die Erfindung eine Anordnung zur Behandlung von Stickoxide und Kohlenwasserstoffe enthaltenden Dieselmotorenabgasen durch selektive katalytische Reduktion der Stickoxide mit Ammoniak oder einer zu Ammoniak zersetzlichen Verbindung als Reduktionsmittel an einem SCR-Katalysator auf der Basis eines Molekularsiebes.

Das Abgas von Dieselmotoren enthält neben den aus einer unvollständigen Verbrennung des Kraftstoffs resultierenden Schadgasen Kohlenmonoxid (CO) und Kohlenwasserstoffe (HC) Rußpartikel (PM) und Stickoxide (NOₓ). Außerdem enthält das Abgas von Dieselmotoren bis zu 15 Vol.-% Sauerstoff. Es ist bekannt, daß die oxidierbaren Schadgase CO und HC durch Überleiten über einen geeigneten Oxidationskatalysator in unbedenkliches Kohlendioxid (CO₂) umgewandelt und Partikel durch Durchleiten des Abgases durch ein geeignetes Rußpartikelfilter entfernt werden können. Auch Technologien zur Entfernung von Stickoxiden aus Abgasen in Gegenwart von Sauerstoff sind im Stand der Technik gut bekannt. Eines dieser "Entstickungsverfahren" ist das sogenannte SCR-Verfahren, d.h. die selektive katalytische Reduktion der Stickoxide mit dem Reduktionsmittel Ammoniak an einem dafür geeigneten Katalysator, dem SCR-Katalysator. Dabei kann Ammoniak als solches oder in Form einer unter Umgebungsbedingungen zu Ammoniak zersetzlichen Vorläuferverbindung dem Abgasstrom zugegeben werden, wobei unter "Umgebungsbedingungen" die Umgebung der zu Ammoniak zersetzlichen Verbindung im Abgasstrom vor SCR-Katalysator verstanden wird. Zur Durchführung des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird als SCR-System bezeichnet.

Zur Einhaltung der in den USA und in Europa geltenden Abgasgrenzwerte für Dieselfahrzeuge war es bislang ausreichend, nur einen Teil der Schadstoffe im Abgas durch Abgasnachbehandlungsverfahren zu entfernen. Die Entstehung der verbleibenden Schadgase wurde durch eine entsprechende Kalibrierung der innermotorischen Verbrennungsbedingungen soweit reduziert, daß die Grenzwerte ohne zusätzliche Abgasnachbehandlung eingehalten werden konnten. So konnte beispielsweise durch Wahl entsprechender Kalibrierpunkte der innermotorischen Verbrennung die Emission von Stickoxiden so gering gehalten werden, daß eine Abgasnachbehandlung zu Entfernung von Stickoxiden nicht nötig war. Dafür enthielt das Abgas größere Mengen an Kohlenmonoxid (CO), unverbrannten Kohlenwasserstoffen (HC) und Partikel (PM), die beispielsweise durch eine Hintereinanderschaltung von Dieseloxidationskatalysator und Dieselpartikelfilter in der Abgasstrecke entfernt werden konnten. Dieses Verfahren kommt bis heute insbesondere bei Personenkraftwagen mit Dieselmotoren zum Einsatz.

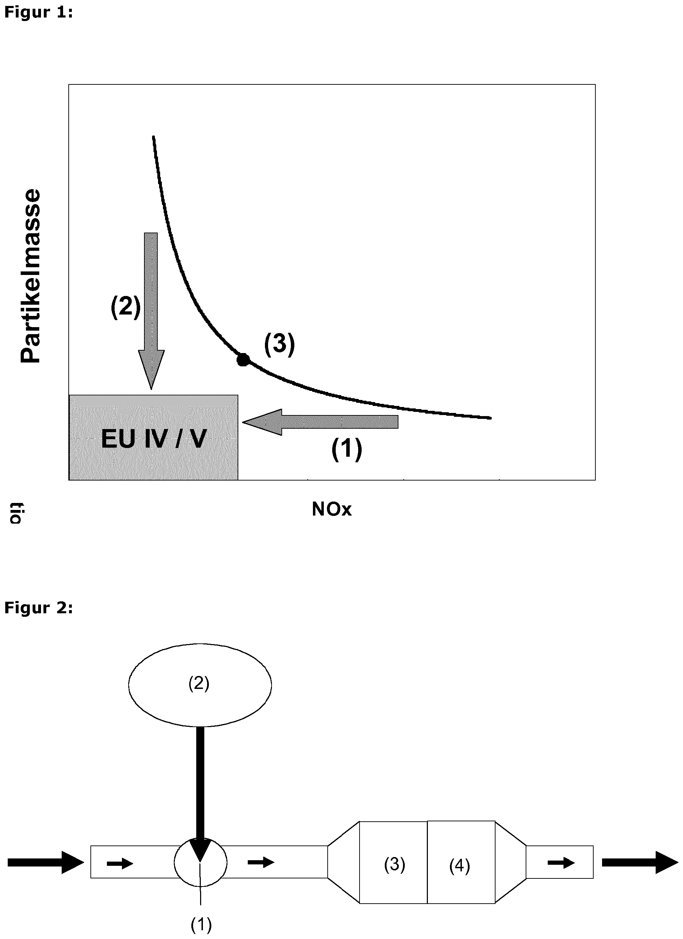

Figur 1 zeigt schematisch den Zielkonflikt zwischen der Reduktion von Partikel und NOₓ durch innermotorische Maßnahmen und die Erreichbarkeit der entsprechenden EU-IV/EU-V-Grenzwerte. Eine Verminderung der Partikelemission durch innermotorische Maßnahmen hat einen Anstieg der Stickoxidgehalte in der Rohemission zur Folge und macht eine nachgelagerte Entstickung des Abgases (1) erforderlich. Vice versa führt eine Verminderung der Stickoxidemissionen durch innermotorische Maßnahmen zu einer Zunahme des Partikelausstoßes und bedingt den Einsatz eines Dieselpartikelfilters (2) zu Erreichung der vorgeschriebenen Grenzwerte.

Die Anwendung von Dieselpartikelfiltern bei Nutzfahrzeugen ist wegen der aufgrund größerer Abgasmassenströme geforderten Aggregategrößen und der mit ihrem Einbau verbundenen Abgasdruckverluste unerwünscht.

Deshalb werden bislang in Nutzfahrzeugapplikationen HC- und Partikelemissionen innermotorisch soweit vermindert, daß eine spezielle Abgasnachbehandlung zur Einhaltung der vorgeschriebenen Partikelgrenzwerte nicht notwendig ist. Stattdessen werden die in erhöhtem Maße emittierten Stickoxide durch ein SCR-System entfernt, dem zur Erhöhung der Tieftemperaturkonversion ein Dieseloxidationskatalysator vorgeschaltet sein kann.

Mit den in Zukunft vorgeschriebenen, weiter verschärften Grenzwerten sind innermotorische Maßnahmen zur Reduktion einzelner Schadgase in der Regel nicht mehr ausreichend. Eine Abgasnachbehandlung zur Entfernung aller vom Motor emittierten Schadgase wird für ab 2010 neu zugelassene Dieselfahrzeuge im allgemeinen unumgänglich sein. Somit wird es für die aktuellen Applikationen zur Dieselabgasnachbehandlung notwendig, Dieseloxidationskatalysator, Dieselpartikelfilter und SCR-Systeme zu kombinieren, wobei die Kombination dieser Aggregate vor allem für den SCR-Katalysator geänderte Betriebsbedingungen mit sich bringt. Derzeit sind drei derartige Systeme in der Erprobung: Im sogenannten "SCRT^{®}-System" nach EP 1 054 722 werden in Strömungsrichtung des Abgases ein Dieseloxdationskatalysator, ein Dieselpartikelfilter und ein SCR-System hintereinander angeordnet. Alternativ kann das SCR-System zwischen einem motornahen Dieseloxidationskatalysator und einem Dieselpartikelfilter im Unterboden des Fahrzeugs (DOC - SCR - DPF) oder vor einer Einheit aus Dieseloxidationskatalysator und Dieselpartikelfilter (SCR-DOC-DPF) angeordnet werden.

Die Kombination von Dieselpartikelfilter und SCR-System in einem Abgasstrang bedingt, daß der SCR-Katalysator in bestimmten Betriebspunkten dauerhaft signifikant höheren HC-Konzentrationen ausgesetzt ist, als dies in bisherigen Applikationen der Fall war. Für diese erhöhten HC-Konzentrationen gibt es mehrere Ursachen:
Zum einen erfolgt die Kalibrierung der innermotorischen Verbrennung nun nicht mehr mit dem Ziel, kostenintensive Abgasnachbehandlungsstufen einzusparen, in einem der Extrempunkte des Verbrennungskennfeldes, sondern nach Gesichtspunkten der Leistungsoptimierung, wobei Partikel und HC sowie Stickoxide als Emission gleichberechtigt zugelassen werden (vgl. Punkt (3) in Figur 1). Dies bedingt eine gewisse HC-Grundbelastung des Abgasnachbehandlungssystems, wobei das Abgas bereits deutlich höhere HC-Konzentrationen aufweist, als in den bislang üblichen, auf die Vermeidung von Partikeln (und HC) kalibrierten Anwendungen, in denen SCR-Systeme zum Einsatz kamen. Zum anderen muß das Dieselpartikelfilter in regelmäßigen Abständen regeneriert werden, was unter anderem durch einen kontrollierten Abbrand der Partikellast geschieht. Hierzu muß das Filter auf eine Temperatur, die oberhalb der Rußzündtemperatur liegt, erwärmt werden. Diese Erwärmung (sog. "heat-up") erfolgt durch Nacheinspritzung von Kraftstoff in den Auslasskolbenhub des Zylinders oder in den Abgasstrang und durch katalytische Umsetzung der unverbrannten Kohlenwasserstoffe auf einem oxidierend wirkenden Katalysator (sog. "heat-up-Katalysator"). Meist übernimmt ein vorgelagerter Dieseloxidationskatalysator die Funktion des "heat-up-Katalysators". Ist dieser wie im System SCR - DOC - DPF nicht vorhanden, so kann - je nach Katalysatorformulierung - auch der SCR-Katalysator "heat-up"-Funktionen übernehmen. In jedem Falle stehen während der Filterregeneration vor dem SCR-Katalysator höhere HC-Konzentrationen an, da die nach Zündung eingespritzen Kohlenwasserstoffe während des "heat-ups" katalytisch nicht vollständig verbrannt werden. In einem SCRT^{®}-System, worin dem SCR-Katalysator Dieseloxidationskatalysator und Dieselpartikelfilter vorgelagert sind, tritt nach einer gewissen Laufzeit zudem eine HC-Dauerbelastung des SCR-Katalysators auf, die auf die hydrothermale Alterung der Oxidationsfunktionen in Dieseloxidationskatalysator und im gegebenenfalls katalytisch beschichteten Filter zurückzuführen ist.

Unabhängig von einer Regeneration des Dieselpartikelfilters können weitere Heizmaßnahmen durch Kraftstoffnacheinspritzung zur Kompensation von Kaltstartverzögerungen notwendig sein und zu kurzzeitig drastisch erhöhten HC-Konzentrationen vor SCR-Katalysator führen.

Die genannten Effekte bedingen, daß der SCR-Katalysator in modernen Abgasreinigungs-Kombinationssystemen geänderten Betriebsbedingungen ausgesetzt ist, wobei die vor dem SCR-Katalysator im Abgas vorhandenen HC-Gehalte deutlich höher sind, als in bisherigen Applikationen. Herkömmliche SCR-Katalysatoren zeigen unter diesen Bedingungen im allgemeinen einen deutlichen Einbruch der Stickoxid-Konvertierungsleistungen.

So speichern beispielsweise die in US 4,961,917 beschriebenen "klassischen" Zeolith-Katalysatoren signifikante Mengen HC in den Zeolithporen ein. Sie zeigen nur dann befriedigende Stickoxid-Umsatzraten, wenn die Kohlenwasserstoffemissionen vor Eintritt in den SCR-Katalysator beispielsweise über einem geeigneten vorgeschalteten Oxidationskatalysator nahezu vollständig entfernt wurden.

Die EP 0 385 164 B1 beschreibt Vollkatalysatoren zur selektiven Reduktion von Stickoxiden mit Ammoniak, die neben Titanoxid und mindestens einem Oxid von Wolfram, Silizium, Bor, Aluminium, Phosphor, Zirkonium, Barium, Yttrium, Lanthan und Cer eine zusätzliche Komponente enthalten, ausgewählt aus der Gruppe der Oxide von Vanadium, Niob, Molybdän, Eisen und Kupfer. Diese Katalysatoren zeigen gegenüber Kohlenwasserstoffen teilweise signifikante Oxidationsaktivität. Dadurch erfolgt eine exotherme Verbrennung der im Abgas enthaltenen Kohlenwasserstoffe am SCR-Katalysator, die bei hohen HC-Mengen zu einer vorzeitigen thermischen Schädigung der SCR-Funktionalität führen kann.

Die DE 10 2004 013 165 A1 offenbart ein zweistufiges Verfahren zur Reduktion von NOx im Abgasstrom eines Kraftfahrzeugs, wobei NOx zuerst an der Oberfläche eines NOx-adsorbierenden Materials lokal aufkonzentriert und dann mit einem Reduktionsmittel reduziert wird. Zur Reduzierung werden im Abgas vorhandene Reduktionsmittel genutzt. In einer Ausführungsform werden ionenausgetauschte Zeolithe genutzt.

Die DE 10 2005 059 250 A1 offenbart die Anordnung eines Oxidationskatalysators nach einem SCR-System, um unerwünschte Emissionen von überschüssigem Ammoniak oder anderen Oxidationsmitteln, Kohlenmonoxid und/oder Kohlenwasserstoffen zu verhindern.

Die WO2008/132452 A2 und die WO2008/106519 A1 offenbaren Anordnungen, bei denen ein SCR-System aus einem Zeolith-SCR-Katalysator und einer Einspritzvorrichtung vor einem Oxidationskatalysato angeordnet ist. Der Zeolith kann bei WO2008/132452 A2 mit Kupfer und/oder Eisen ausgetauscht sein und ist Kupfert-Chabazit bei der WO2008/106519 A1.

Aufgabe der vorliegenden Erfindung war die Angabe einer Vorrichtung zur Verringerung des NOₓ-Gehalts eines Kohlenwasserstoffe enthaltenden Stroms von Abgasen eines mager betriebenen Verbrennungsmotors mittels des mit Ammoniak betriebenen SCR-Systems, welche in einer gegenüber dem Stand der Technik verbesserten Art und Weise ausgestaltet ist. Insbesondere sollte das NOₓ-Reduktionsverhalten in Kohlenwasserstoffe enthaltenden Dieselmotorenabgasen durch Einsatz eines für solche Anwendungen vorteilhaften SCR-Katalysators verbessert werden.

Die Aufgabe wird gelöst durch eine Anordnung zur Behandlung von Stickoxide (NOₓ) und Kohlenwasserstoffe (HC) enthaltenden Dieselmotorenabgasen, wobei ein SCR-System aus einem SCR-Katalysator und einer Einspritzeinrichtung für Reduktionsmittel vor einem Oxidationskatalysator angeordnet ist, wobei der SCR-Katalysator einen mit Kupfer (Cu) und Eisen (Fe) ausgetauschten Zeolithen enthält und der Zeolith so beschaffen ist, dass die im Abgas enthaltenen Kohlenwasserstoffe durch die molekularsiebartige Wirkung des Zeolithen von den aktiven Zentren im Katalysator, an denen die Umsetzungen stattfinden, ferngehalten werden, wobei der Zeolith eine größte untere Kanalweite von 2,6 Ä - 4,2 Ä aufweist. Untersuchungen zum Light-Off-Verhalten gängiger SCR-Katalysatoren zeigen, daß eine Stickoxid-Reduktion mit Ammoniak in der Regel erst einsetzt, wenn im Abgas vorhandene Kohlenwasserstoffe vollständig umgesetzt sind. Dies deutet darauf hin, daß die Kohlenwasserstoffe die für die Reduktion der Stickoxide mit Ammoniak benötigten katalytisch aktiven Zentren in Übergangsmetall-basierten, wie auch in herkömmlichen Zeolith-basierten SCR-Katalysatoren reversibel blockieren und dadurch die Komproportionierung der Stickoxide mit Ammoniak mindestens verzögern bzw. je nach Betriebstemperatur sogar verhindern.

Überraschenderweise wurde nun festgestellt, daß diese Verzögerung bzw. Verhinderung der Komproportionierung von Stickoxiden mit Ammoniak zu Stickstoff in Gegenwart von Kohlenwasserstoffen nicht zu beobachten ist, wenn die Umsetzung an einem SCR-Katalysator auf Basis eines Cu und Fe ausgetauschten Zeolithen erfolgt, wobei der Zeolith eine größte untere Kanalweite von 2,6 Ä - 4,2 Ä aufweist. Durch Überleitung des Stickoxide und Kohlenwasserstoffe enthaltenden Dieselmotorenabgases über einen solchen SCR-Katalysator nach Zugabe von Ammoniak als solchem oder einer zu Ammoniak zersetzlichen Vorläuferverbindung aus einer nicht zum Abgsastrang gehörenden Quelle ist es in erstaunlicher Weise möglich, selektiv NOₓ ohne Beeinflussung der SCR-Aktivität durch andere anwesende Moleküle, wie z.B. Kohlenwasserstoffe mit dem dem Abgasstrom zugefügten NH₃ umzusetzen. Durch die molekularsiebartige Wirkung des eingesetzten Cu und Fe-ausgetauschten Zeolithen werden derartige Kohlenwasserstoffe von den aktiven Zentren, an denen die Umsetzungen stattfinden, ferngehalten. Dies bedingt eine deutlich gesteigerte (Langzeit)Aktivität des im erfindungsgemäßen Verfahren zum Einsatz kommenden SCR-Katalysators.

Zeolithe können unterschiedlich strukturierte Kanäle in ein und demselben Material aufweisen. Die Kanalweiten für die jeweiligen Öffnungen der Kanäle können daher verschiedene untere bzw. obere Kanalweiten (Def.: crystallographic free diameters of the channels in Å) besitzen (Ch. Baerlocher, Atlas of Zeolite Framework Types, 5th revised edition, 2001, ISBN: 0-444-50701-9). In diesen Fällen ergeben sich für die jeweiligen Arten von Kanälen mehrere größere untere Kanalweiten. Gleiches gilt, wenn Gemische von derartigen Materialien Verwendung finden. In diesen Fällen beziehen sich die größeren unteren Kanalweiten auf das Material mit den jeweils kleineren Kanalweiten. Es ist damit ausreichend, wenn zumindest eine Kanalweite des eingesetzten Zeolithen eine Kanalweite innerhalb des angegebenen Bereichs von 2,6 Å - 4,2 Å aufweist.

Sofern Katalysatoren (bezogen auf deren Vorliegen im Washcoat als katalytisch aktive Komponente) auf Basis von Gemischen aus Zeolithen eingesetzt werden, bedeutet dies, dass erfindungsgemäße Ausführungsformen dann vorherrschen, wenn zumindest 40 Gew.-% des Katalysators aus Cu und Fe ausgetauschten Zeolithen bestehen, bei denen eine größte untere Kanalweite von 2,6 Å - 4,2 Å existiert. Weiter bevorzugt enthält der Katalysator mindestens 50 Gew.-%, weiter bevorzugt mindestens 60%, besonders bevorzugt mindestens 70% und ganz besonders bevorzugt mindestens 80% derartige Materialien.

Innerhalb der angegebenen Grenzen ist der Fachmann frei darin, die größeren unteren Kanalweiten der eingesetzten Zeolithe zu wählen. Wichtig ist, dass er die größte untere Kanalweite des eingesetzten Zeolithen so wählt, dass Ammoniak und Stickoxide noch Zugang zu den aktiven Zentren innerhalb des Zeolithen finden, wobei Kohlenwasserstoffe jedoch möglichst vom Eindiffundieren in die Kanäle abgehalten werden. Bei Zeolithen mit mehreren Arten von Kanälen ist hierbei die größte untere Kanalweite maßgeblich.

Als Zeolithe bezeichnet man gemeinhin kristalline Alumosilikate mit einer porösen Gerüststruktur aus eckenverbundenen AlO₄- und SiO₄-Tetraedern (W. M. Meier, Pure & Appl. Chem. 58, 1986, 1323-1328). Diese weisen naturgemäß eine negative Überschussladung im Gitter auf, die durch Einlagerung von positiven Ionen (z.B. H⁺, Na⁺, NH₄⁺) ausgeglichen werden muss. Die Ionen können frei gewählt werden. Im vorliegenden Fall werden teilweise Fe- oder Cu-Ionen als Gegenionen gewählt (s.o.). Wie viele Ionen eingelagert werden können, richtet sich auch nach dem Verhältnis von Aluminium- zu Silizium-Atomen im Kristallgitter. Für die vorliegende Erfindung ist es vorteilhaft, wenn das molare Verhältnis von SiO₂ zu Al₂O₃ im Zeolithen im Bereich von 5 bis 100 liegt. Bevorzugt ist ein Bereich von 10 bis 60 und ganz besonders bevorzugt 15 bis 45.

Zeolithe, die den angegebenen Anforderungen gerecht werden, sind dem Fachmann geläufig. Erfindungsgemäß einsetzbare Zeolithen sind beispielsweise der Literatur Ch. Baerlocher, Atlas of Zeolite Framework Types, 5th revised edition, 2001, ISBN: 0-444-50701-9 zu entnehmen. Vorliegend handelt es sich um Fe- und/oder Cu-ausgetauschte Zeolithe. Diese und deren Herstellung sind speziell in der Literatur beschrieben (K. Sugawara, Appl. Catal. B. 69, 2007, 154-163; W. Arous et al., Top. Catal. 42-43, 2007, 51-54 ; Ishihare et al., J. Catal. 169, 1997, 93-102). Bevorzugt sind Zeolithe ausgewählt aus der Gruppe bestehend aus Ferrierit, Chabazit und Erionit. Ganz besonders bevorzugt ist der Einsatz von Ferrierit.

Im Rahmen der Erfindung bedeutet Katalysator auf Basis eines Cu und Fe ausgetauschten Zeolithen, dass der Zeolith Cu und Fe anstelle der ursprünglich vorhandenen positiven Gegenionen aufweist. Der Fachmann kann den Gehalt an Fe- und Cu-Ionen im Zeolithen nach seinem Fachwissen einstellen. Vorteilhaft ist ein Wert von 0,1 - 10 Gew.-% der Ionen bezogen auf das Gewicht des Zeolithen. Bevorzugt beträgt das Verhältnis 1 - 8 Gew.-% und ganz besonders bevorzugt 1,5 - 6 Gew.-%.

Der Einsatz der Zeolithe Ferrierit, Chabazit und Erionit als Bestandteile von SCR-Katalysatoren ist im Stand der Technik bereits bekannt. Wie Zeolith Beta, Zeolith Y, Zeolith A oder Mordenit zeigen Ferrierit, Chabazit und Erionit eine gute Aktivität in der selektiven katalytischen Reduktion von Stickoxiden mit Ammoniak in HC-freiem oder zumindest in HC-armem Dieselmotorenabgas, wobei mit "HC-arm" ein Abgas bezeichnet wird, das einen HC-Gehalt von nicht mehr als 30 ppm aufweist. Sobald jedoch der Kohlenwasserstoffgehalt im Abgas einen unteren Schwellwert von 50 ppm erreicht bzw. überschreitet, zeigen Zeolithe mit einer größeren unteren Kanalweite von mehr als 4,2 Å einen mit zunehmender Katalysatorbelastung größer werdenden Aktivitätseinbruch in der Komproportionierung von NOₓ mit NH₃. Dieser Aktivitätseinbruch ist besonders ausgeprägt bei SCR-Katalysatoren auf Basis von Zeolith Beta, Zeolith Y, Zeolith A oder Mordenit. Mit Kupfer (Cu) und Eisen ausgetauschte Zeolithe des Strukturtyps Ferrierit, Chabazit und Erionit zeigen diesen Aktivitätseinbruch in Kohlenwasserstoffhaltigen Dieselmotorenabgasen überraschenderweise nicht. Sie sind - im Gegensatz zu den vorstehend genannten Zeolithen Beta, A , Y und MOR - so beschaffen, daß die im Abgas enthaltenen Kohlenwasserstoffe infolge der molekularsiebartigen Wirkung der Zeolithe, von den katalytisch aktiven Zentren im Katalysator, an denen die Umsetzungen stattfinden, ferngehalten werden. Auf diese Weise wird die reversible Blockade der katalytisch aktiven Zentren verhindert und Alterungserscheinungen, die infolge thermischer Regenerationseffekte am Zeolithen entstehen können und die Langzeitstabilität herkömmlicher SCR-Katalysatoren in HC-haltigen Dieselmotorenabgasen deutlich vermindern, werden vermieden.

Besonders deutlich werden die Vorteile der Erfindung, wenn der Kohlenwasserstoffgehalt im Abgas vor der Umsetzung von NOₓ mit dem dem Abgasstrom zugefügten Ammoniak NH₃ am SCR-Katalysator mindestens 50 ppm beträgt. Ganz besonders deutlich zeigt sich der Vorteil der Erfindung bei Kohlenwasserstoffgehalten im Dieselmotorenabgas vor SCR-Katalysator von mindestens 100 ppm. Dies gilt insbesondere dann, wenn der Kohlenwasserstoffgehalt im Abgas vor der Umsetzung von NOₓ mit NH₃ am SCR-Katalysator (gemäß Schritt b)) kurzzeitige Spitzenwerte von mindestens 300 ppm respektive 500 ppm aufweist. Es sei darauf hingewiesen, daß je nach Applikation und Betriebsweise des Fahrzeugs nicht selten HC-Spitzenwerte vor SCR-Katalysator von 1000 ppm und mehr beobachtet werden. In Schwerlastfahrzeug-Applikationen und in Dieselmotorbetriebenen Arbeitsmaschinen werden im Abgas vor SCR-Katalysator HC-Spitzen von bis zu 2 Vol.-% beobachtet. In solchen Fällen ist ein Einsatz von HC-resistenten SCR-Katalysatoren, wie sie die Basis des erfindungsgemäßen Verfahrens bilden, unumgänglich, da sich die "klassischen", auf Zeolith Beta, A, Y oder MOR basierenden SCR-Katalysatoren unter diesen Bedingungen mit Kohlenwasserstoffen "vollsaugen" und keinerlei hinreichende NOₓ-Konvertierung mit Ammoniak mehr zeigen.

Die Katalysatoren enthaltend Cu- und Fe-ausgetauschte Zeolithe, welche so beschaffen sind, daß sie die im Abgas enthaltenen Kohlenwasserstoffe durch ihre molekularsiebartige Wirkung von den aktiven Zentren im Katalysator, an denen die Umsetzungen stattfinden, fernhalten, tragen unter regulären Fahrzyklusbedingen bevorzugt nicht maßgeblich zur Verminderung des Kohlenwasserstoffgehalts im Abgas bei. Bei der erfindungsgemäßen Anordnung ist vor dem SCR-System, d.h. vor dem SCR-Katalysator und der zugehörigen Einspritzeinrichtung für Reduktionsmittel (NH₃ oder Vorläuferverbindung) ein Oxidationskatalysator oder ein Oxidationskatalysator und ein gegebenenfalls beschichtetes Partikelfilter angeordnet ist. Für diesen Zweck geeignete Oxidationskatalysatoren können der Literatur entnommen werden (EP 1 255 918 B1, US 20050201916). Geeignete Partikelfilter können ebenfalls der Literatur entnommen werden (EP 1 250 952 A1, WO 2006/021337 A1). Die eingesetzten Einspritzvorrichtungen können vom Fachmann beliebig gewählt werden. Geeignete Systeme können der Literatur entnommen werden (T. Mayer, Feststoff-SCR-System auf Basis von Ammouiumcarbamat, Dissertation, TU Kaiserslautern, 2005). Das Ammoniak kann über die Einspritzvorrichtung als solches oder in Form einer Verbindung in den Abgasstrom eingebracht werden, die bei den Umgebungsbedingungen Ammoniak entstehen lässt. Als solche kommen u.a. wässrige Lösungen von Harnstoff oder Ammoniumformiat in Frage, ebenso wie festes Ammoniumcarbamat. Diese können aus einer bereitgestellten, dem Fachmann an sich bekannten Quelle (Figur 2) entnommen und in geeigneter Art und Weise dem Abgasstrom zugefügt werden. Besonders bevorzugt setzt der Fachmann Einspritzdüsen (EP 0311758 A1) ein. Mittels dieser wird das optimale Verhältnis von NH₃/NOx eingestellt, damit eine möglichst vollständige Umsetzung der Stickoxide zu N₂ erfolgen kann.

Das vom Verbrennungsvorgang stammende Abgas wird über die Einspritzvorrichtung mit Ammoniak oder der Vorläuferverbindung in entsprechenden Mengen versorgt. Anschließend wird es über den SCR-Katalysator geleitet. Die Temperatur über dem SCR-Katalysator sollte dabei zwischen 150°C und 500°C, bevorzugt zwischen 200°C und 400°C oder zwischen 180°C und 380°C betragen, damit die Reduktion möglichst vollständig von Statten gehen kann. Besonders bevorzugt ist ein Temperaturbereich von 225°C bis 350°C für die Reduktion. Weiterhin werden optimale Stickoxid-Umsätze nur erzielt, wenn ein molares Verhältnis von Stickstoffmonoxid zu Stickstoffdioxid vorliegt (NO/NO₂ = 1) bzw. das Verhältnis NO₂/NOₓ = 0,5 ist (G. Tuenter et al., Ind. Eng. Chem. Prod. Res. Dev. 1986, 25, 633-636;). Optimale Umsätze beginnend mit 75% Konvertierung bereits bei 150°C bei gleichzeitig optimaler Selektivität zu Stickstoff werden gemäß der Stöchiometrie der Reaktionsgleichung

2 NH₃ + NO + NO₂ → 2 N₂ + 3 H₂O

nur mit einem NO₂/NOx-Verhältnis von 0,5 erzielt. Dies gilt nicht nur für SCR-Katalysatoren auf der Basis von Eisen-ausgetauschten Zeolithen, sondern für alle gängigen, d.h. kommerziell erhältlichen SCR-Katalysatoren.

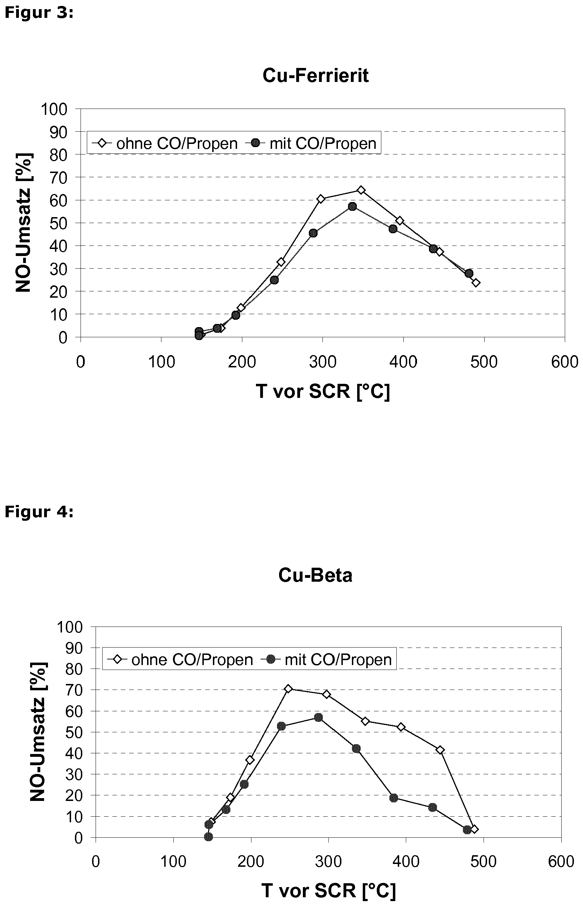

Metallausgetauschte Beta-Zeolithe (größte untere Kanalweite 6.6 Å) als Katalysatormaterialien zeigen eine hohe Aktivität für die Reduktion von NOx mittels Ammoniak in sogenannten SCR-Systemen. Bei Anwesenheit von Kohlenwasserstoffen im Abgas zeigen sie, wie beschrieben, allerdings einen starken Einbruch ihrer Aktivität (Beispiel 3, Figur 4 vs. Figur 3). Dies ist nach Erkenntnissen der Erfinder auf einen Vergiftungs- oder Speicherungseffekt zurückzuführen, bei dem die eingelagerten Kohlenwasserstoffe die aktiven Zentren des Katalysators besetzen und so die gewünschte Komproportionierungsreaktion verhindern. Der Vorgang ist grundsätzlich reversibel, jedoch bedingt jede Regeneration des Beta-Zeolith-basierten Katalysators eine Degradation der SCR-Aktivität infolge thermisch induzierter Alterungsprozesse.

Zur weiteren Veranschaulichung der vorteilhaften Anwendung von metallausgetauschten Zeolithen mit einer größten unteren Kanalweite von 4.2 Ä als SCR-Katalysator wurde der nachfolgend beschriebene, aus fünf Phasen bestehende Test an einer Modellgasanlage durchgeführt (Beispiel 4).

Als Beispiel dient ein auf Fe-Ferrierit (3,5 % Fe) basierender SCR-Katalysator, als Vergleichsbeispiel ein Fe-Beta-Zeolith (genannt Fe-Beta - ebenfalls 3,5 % Fe). Zur Veranschaulichung des Testablaufs ist das Dosier- und Temperaturprofil des Tests in Figur 5 dargestellt. Die nachfolgend besprochenen Verläufe der NOx-Umsätze der beiden Katalysatoren werden in Figur 6 gezeigt, die entsprechenden Verläufe von HC- und CO-Konzentrationen im Abgas in den Figuren 7 und 8. Es sei darauf hingewiesen, dass die Washcoatbeladungen der beiden SCR-Katalysator-Muster unterschiedlich ist (165 g/L Fe-Ferrierit vs. 229 g/L Beta-Zeolith).
Phase I: Bestimmung des NOx-Umsatzes ohne Kohlenwasserstoffe (T = 300°C, 250 ppm NO, 250 ppm NO₂ 500 ppm NH₃, 5 Vol.-% O₂, 1.3 Vol.-% H₂O, Balance N₂, Raumgeschwindigkeit 50000 h⁻¹). Beim Fe-Ferrierit wird ein NOx-Umsatz von 98 % erreicht, beim Fe-Beta 99 %.
Phase II: Dauer 1800s. Dem Feedgas aus Phase I wird ein Gemisch aus Toluol und Dodekan (1:1 w/w) mit 1000 ppm C1 zugesetzt. Der NOx-Umsatz des Fe-Ferrieriten wird kaum beeinflusst (94 %), während beim Fe-Beta der Umsatz stark einbricht auf 55 %. Während die HC-Menge im Abgas beim Fe-Ferrierit schnell auf den Feedwert von 1000 ppm durchbricht, speichert der Fe-Beta über die gesamte Dauer der Phase II Kohlenwasserstoffe.
Phase III: Dauer 1800 s. Das Toluol/Dodekan-Gemisch wird wieder aus dem Feedgas entfernt, somit herrschen dieselben Messbedingungen wie in Phase I. Der NOx-Umsatz des Fe-Ferrieriten bleibt mit 95 % auf hohem Niveau stabil, während der Umsatz sich beim Fe-Beta über diese Phase langsam auf nur 85 % erholt.
Phase IV: Dauer 200 s. Regeneration des Katalysators bei 500°C. Während beim Fe-Ferrieriten nur geringe Mengen an thermisch desorbiertem Kohlenwasserstoffen und CO (Produkt des Abbrands von Dodekan und Toluol) im Abgas detektiert werden, zeigt sich beim Fe-Beta, dass die während Phase II eingespeicherten Kohlenwasserstoffe nun desorbieren oder abbrennen.
Phase V: Gleiche Bedingungen wie in Phase I. Beim Fe-Ferrieriten bleibt der NOx-Umsatz stabil bei 95 %, beim Fe-Beta wird nach der Regeneration in Phase IV ein Wert von 93 % ermittelt.

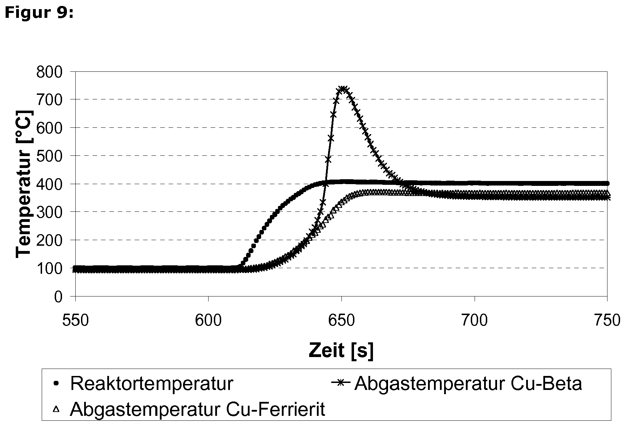

Neben dem Einbruch der SCR-Aktivität in Gegenwart von Kohlenwasserstoffen tritt bei weitporigen Zeolithen besonders im Frischzustand als wieterer unerwünschter Effekt eine starke Exothermie auf, wenn die auf dem Katalysator gespeicherten Kohlenwasserstoffe zünden und abbrennen (siehe Beispiel 5). Durch den dabei erzeugten Temperaturanstieg erfährt der Katalysator eine Alterung, die zur Verminderung seiner Aktivität führt. Dies ist bei erfindungsgemäß eingesetzten Zeolithen, wie beispielsweise Ferrierit, auch im Frischzustand nicht der Fall. Da allenfalls nur eine kleine Menge an Kohlenwasserstoffen auf dem Katalysator gespeichert wird, tritt bei deren Abbrand nur ein geringer Temperaturanstieg auf dem Katalysator auf. Somit wird auch die Schädigung des Katalysators reduziert. Beaufschlagt man beispielsweise einen Cu-Beta-Zeolithen (Cu-Beta) mit einer größten unteren Kanalweite von 6.6 Å und einen Cu-Ferrieriten mit einer größten unteren Kanalweite von 4.2 Å mit Kohlenwasserstoffen und zündet diese durch Erhöhung der Reaktortemperatur von 100°C auf 400°C in sauerstoffhaltiger Atmosphäre, so tritt beim Cu-Beta-Zeolithen aufgrund des Abbrands einer großen gespeicherten Menge an eingelagerten Kohlenwasserstoffen eine Temperaturspitze von mehr als 700°C im Abgas auf, während die Abgastemperatur beim Cu-Ferrieriten ohne Temperaturspitze der Reaktortemperatur folgt (Figur 9).

### Beschreibung der Figuren:

- **Figur 1:**: Die schematische Darstellung des Zusammenhangs zwischen Partikelemission und NOₓ-Emission im Rohabgas eines über-wiegend mager betriebenen Verbrennungsmotors und die nach EU-IV/V gültigen Grenzwerte; (1): Verminderung der Partikelrohemission bis unter den gegebenen Grenzwert durch innermotorische Maßnahmen → Verminderung der NOₓ-Emission durch Abgasnachbehandlung (Entstickung); (2): Verminderung der NOₓ-Rohemission bis unter den gegebenen Grenzwert durch innermotorische Maßnahmen → Verminderung der Partikelemission (Dieselpartikelfilter); (3): Kalibrierung der innermotorischen Verbrennung nach Gesichtspunkten der Leistungsoptimierung → Verminderung von Partikel- und NOₓ-Emission durch Abgasnachbehandlungsmaßnahmen zur Erreichung der vorgegebenen Grenzwerte
- **Figur 2:**: Die schematische Darstellung einer bevorzugten Ausführungsform der erfindungsgemäßen Vorrichtung mit (1) der Einspritzvorrichtung zur Zugabe von Ammoniak oder einer zu Ammoniak erzeugende Vorläuferverbindung in den Abgasstrom (Strömungsrichtung mit "→" gekennzeichnet) aus einer nicht zum Abgasstrang gehörenden Quelle (2), einem SCR-Katalysator (3), der die Komproportionierung der Stickoxide mit Ammoniak in einem Temperaturbereich zwischen 150°C und 500°C wirksam katalysiert und einem vorhandenen Oxidationskatalysator (4), der den vorhandenen NHs-Schlupf durch Oxidation des NH₃ zu Stickstoff und Wasser verhindern hilft.
- **Figur 3:**: SCR-Aktivität von Cu-Ferrierit (größte untere Kanalweite 4.2 Å unter 500 ppm NO, 450 ppm NH₃, 5% O₂, 1.3% H₂O und Stickstoff ohne und mit 200 ppm Propen und 200 ppm CO.
- **Figur 4:**: SCR-Aktivität von Cu-Beta-SCR-Katalysator (größte untere Kanalweite 6.6 Å) unter 500 ppm NO, 450 ppm NH₃, 5% O₂, 1.3% H₂O und Stickstoff ohne und mit 200 ppm Propen und 200 ppm CO (Vergleichsbeispiel).

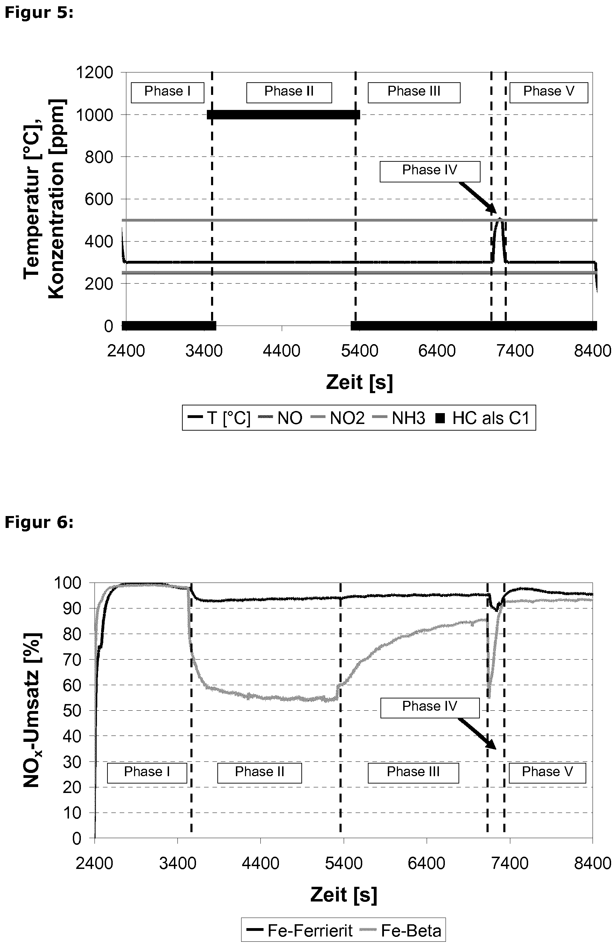

- **Figur 5:**: Temperaturprofil des in 5 Phasen gegliederten Modellgastests aus Beispiel 4 sowie dosierte Konzentrationen der Komponenten NO, NO₂, NH₃ und Kohlenwasserstoffe
- **Figur 6:**: Verlauf des NOx-Umsatzes des Tests aus Beispiel 4 für einen Fe-Ferrierit und Fe-Beta-SCR-Katalysator gemäß Beispiel 2

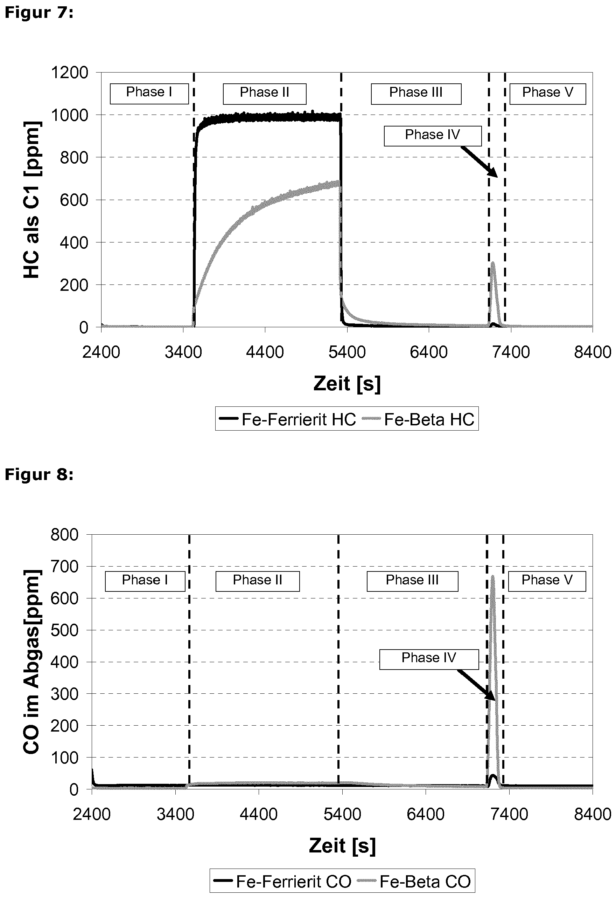

- **Figur 7:**: Verlauf der HC-Konzentrationen im Abgas des Tests aus Beispiel 4 für einen Fe-Ferrierit und Fe-Beta-SCR-Katalysator gemäß Beispiel 2
- **Figur 8:**: Verlauf der CO-Konzentrationen im Abgas des Tests aus Beispiel 4 für einen Fe-Ferrierit und Fe-Beta-SCR-Katalysator (Vergleichsbeispiel) gemäß Beispiel 2
- **Figur 9:**: Abgastemperatur nach einem Cu-Beta-SCR-Katalysator (Vergleichsbeispiel) und einem Cu-Ferrierit-SCR-Katalysator nach Zünden darauf gespeicherter Kohlenwasserstoffe durch Erhöhung der Reaktionstemperatur gemäß Beispiel 5.

### Beispiele:

### Beispiel 1 - Allgemeine Herstellung des Katalysators:

Ein Zeolith mit einer größten unteren Kanalweite von maximal 4.2 Å wird im Lödige mit Kupfer und Eisen imprägniert. Nach Trocknung wird das Pulver für 2 Stunden bei 500°C kalziniert. Das Pulver oder eine Mischung verschiedener solcher Pulver wird in Wasser aufgeschlämmt und ein Binder zugesetzt (10 Gew.-% SiO₂-Sol, kommerziell erhältlich). Im Anschluss wird mit dem erhaltenen Washcoat ein monolithisches Katalysatorsubstrat beschichtet und bei 500 °C für 2 Stunden nachkalziniert. Aus dem Monolithen werden Bohrkerne für Modellgastests entnommen. Nach dieser Vorgehensweise wurden die Katalysatoren für Beispiel 3 in Figur 3 (Ferrierit mit 5 % Cu) und das Vergleichsbeispiel in Figur 4 (Beta mit 5 % Cu) hergestellt.

### Beispiel 2 - Allgemeine Herstellung des Katalysators:

Ein Gemisch aus silizium- und aluminiumoxidbasierenden Bindern (SiO₂-Sol, kommerziell erhältlich; Böhmit, kommerziell erhältlich) wird in Wasser vorgelegt. Hierin wird der dem SCR-Katalysator zugrundeliegende Zeolith mit einer größten unteren Kanalweite von maximal 4.2 Å aufgeschlämmt. Im Anschluss wird der Suspension eine dem gewünschten Metallgehalt entsprechende Menge eines geeigneten Eisen- und Kupfersalzes hinzugesetzt. Nach Mahlung wird der so erhaltene Washcoat zum Beschichten eines monolithischen Substrats verwendet, und das beschichtete Substrat wird kalziniert. Aus dem Monolithen werden Bohrkerne für Modellgastests entnommen. Diese Methode wurde zur Herstellung des in den Figuren 5 bis 8 gezeigten Fe-Ferrieriten und zur Herstellung des entsprechenden Vergleichsbeispiels (Fe-Beta, ebenfalls Figuren 5 bis 8) verwendet.

### Beispiel 3: - Bestimmung der SCR-Aktivität mit und ohne Kohlenwasserstoff (Figuren 3 und 4) (nicht erfindungsgemäß):

Der zu untersuchende, gemäß Beispiel 1 hergestellte, Bohrkern wurde nach hydrothermaler Alterung (16 Stunden bei 750°C, 10 % O₂, 10 % H₂O, Balance N₂, Raumgeschwindigkeit 2200 h⁻¹) in einem Modellgastest untersucht. Hierzu wurde in absteigender Temperaturreihenfolge im Temperaturbereich von 150°C bis 500°C der NOx-Umsatz unter 500 ppm NO, 450 ppm NH₃, 1.3 Vol.-% H₂O, 5 Vol.-% O₂, Balance N₂, Raumgeschwindigkeit 30.000 h⁻¹) unter Stationärbedingungen bestimmt. Dieser Test wurde einmal in Anwesenheit von 200 ppm Propen und 200 ppm CO im Feedgas durchgeführt und einmal in Abwesenheit dieser Substanzen.

### Beispiel 4 - Bestimmung der SCR-Aktivität mit und ohne Kohlenwasserstoff (Figuren 5 bis 8) (nicht erfindungsgemäß):

Ein gemäß Beispiel 2 hergestellter Bohrkern wurde nach hydrothermaler Alterung (48 Stunden bei 650°C, 10 % O₂, 10 % H₂O, Balance N₂, Raumgeschwindigkeit 2200 h⁻¹) in einem aus fünf Phasen bestehenden Modellgastest untersucht.
▪ Phase I: Bestimmung des NOx-Umsatzes ohne Kohlenwasserstoffe (T = 300°C, 250 ppm NO, 250 ppm NO_{2,} 500 ppm NH₃, 5 Vol.-% O₂, 1.3 Vol.-% H₂O, Balance N₂, Raumgeschwindigkeit 50.000 h⁻¹).
▪ Phase II: Dauer 1800s. Dem Feedgas aus Phase I wird ein Gemisch aus Toluol und Dodekan (1:1 w/w) mit 1000 ppm C1 zugesetzt.
▪ Phase III: Dauer 1800 s. Das Toluol/Dodekan-Gemisch wird wieder aus dem Feedgas entfernt, somit nun wieder gleiche Messbedingungen wie in Phase I..
▪ Phase IV: Dauer 200 s. Regeneration des Katalysators durch Aufheizen des Reaktors auf 500°C und Wiederabkühlen auf 300°C.
▪ Phase V: Gleiche Bedingungen wie in Phase I.

### Beispiel 5 - Bestimmung der Exothermie durch eingespeicherte Kohlenwasserstoffe (Figur 9) (nicht erfindungsgemäß):

Ein gemäß Beispiel 1 hergestellter Bohrkern des zu untersuchenden Katalysators (1 Zoll Durchmesser, 3 Zoll Länge) wird am Motorprüfstand bei 100°C für eine Zeit von 60 Minuten mit Kohlenwasserstoffen beaufschlagt. Im Anschluss wird der Bohrkern in einer Modellgasanlage bei 100°C Reaktortemperatur für 10 Minuten vorkonditioniert (10% O₂, 10% CO₂, 5% H₂O, Balance N₂, 4 m³/h Gesamtfluss), anschließend wird die Reaktortemperatur innerhalb von 30 Sekunden bei gleicher Gasmischung auf 400°C angehoben. Die Temperatur des Abgases 3 Zoll hinter dem Bohrkern wird als Maß für die entstandene Exothermie ausgewertet.

## Patentansprüche

1. Anordnung zur Behandlung von Stickoxide (NOₓ) und Kohlenwasserstoffe (HC) enthaltenden Dieselmotorenabgasen, wobei ein SCR-System aus einem SCR-Katalysator (3) und einer Einspritzeinrichtung (1) für Reduktionsmittel vor einem Oxidationskatalysator (4) angeordnet ist,
wobei der SCR-Katalysator einen mit Kupfer (Cu) und Eisen (Fe) ausgetauschten Zeolithen enthält und der Zeolith so beschaffen ist, dass die im Abgas enthaltenen Kohlenwasserstoffe durch die molekularsiebartige Wirkung des Zeolithen von den aktiven Zentren im Katalysator, an denen die Umsetzungen stattfinden, ferngehalten werden, wobei der Zeolith eine größte untere Kanalweite von 2,6 Å - 4,2 Å aufweist.

2. Anordnung gemäß Anspruch 1, **dadurch gekennzeichnet, dass** der Zeolith ausgewählt ist aus der Gruppe bestehend aus Ferrierit, Chabazit und Erionit.

3. Anordnung gemäß Anspruch 1 und/oder 2, **dadurch gekennzeichnet, dass** der Zeolith Chabazit ist.

4. Anordnung gemäß einem oder mehreren der Ansprüche 1 bis 3,
**dadurch gekennzeichnet, dass** der Zeolith ein molares Verhältnis von SiO₂ zu Al₂O₃ im Bereich von 5 bis 100 aufweist.

5. Anordnung gemäß einem oder mehreren der Ansprüche 1 bis 4,
**dadurch gekennzeichnet, dass** der Zeolith ein molares Verhältnis von SiO₂ zu Al₂O₃ im Bereich von 10 bis 60 aufweist.

6. Anordnung gemäß einem oder mehreren der Ansprüche 1 bis 5,
**dadurch gekennzeichnet, dass** der Zeolith ein molares Verhältnis von SiO₂ zu Al₂O₃ im Bereich von 15 bis 45 aufweist.

7. Anordnung gemäß einem oder mehreren der Ansprüche 1 bis 6,
**dadurch gekennzeichnet, dass** der Gehalt an Cu-Ionen und Fe-Ionen im Zeolithen 0,1 - 10 Gew.-% Cu-Ionen und Fe-Ionen bezogen auf das Gewicht des Zeolithen beträgt.

8. Anordnung gemäß einem oder mehreren der Ansprüche 1 bis 7,
**dadurch gekennzeichnet, dass** der Gehalt an Cu-Ionen und Fe-Ionen im Zeolithen 1 - 8 Gew.-% Cu-Ionen und Fe-Ionen bezogen auf das Gewicht des Zeolithen beträgt.

9. Anordnung gemäß einem oder mehreren der Ansprüche 1 bis 8,
**dadurch gekennzeichnet, dass** der Gehalt an Cu-Ionen und Fe-Ionen im Zeolithen 1,5 - 6 Gew.-% Cu-Ionen und Fe-Ionen bezogen auf das Gewicht des Zeolithen beträgt.

10. Anordnung gemäß einem oder mehreren der Ansprüche 1 bis 9,
**dadurch gekennzeichnet, dass** das SCR-System aus einem SCR-Katalysator und einer Einspritzeinrichtung für Reduktionsmittel vor einem Oxidationskatalysator und einem Partikelfilter angeordnet ist.

11. Anordnung gemäß Anspruch 10, **dadurch gekennzeichnet, dass** der Partikelfilter beschichtet ist.

12. Verfahren zur Behandlung von Stickoxide (NOₓ) und Kohlenwasserstoffe (HC) enthaltenden Dieselmotorenabgasen umfassend:
a) die Zugabe von Ammoniak (NH₃) als solchem oder einer zu Ammoniak zersetzlichen Vorläuferverbindung aus einer nicht zum Abgasstrang gehörenden Quelle in den Stickoxide und Kohlenwasserstoffe enthaltenden Abgasstrom; und
b) die selektive Umsetzung von NOₓ mit dem dem Abgasstrom zugefügten NH₃ an einer Anordnung gemäß einem oder mehreren der Ansprüche 1 bis 11.

13. Verfahren gemäß Anspruch 12, **dadurch gekennzeichnet, dass** der Kohlenwasserstoffgehalt im Abgas vor der Umsetzung von NOₓ gemäß Schritt b) mindestens 50 ppm beträgt.

14. Verfahren gemäß Anspruch 12 und/oder 13, **dadurch gekennzeichnet, dass** der Kohlenwasserstoffgehalt im Abgas vor der Umsetzung von NOₓ gemäß Schritt b) kurzzeitige Spitzenwerte von mindestens 300 ppm aufweist.

## Claims

1. Arrangement for treating diesel engine exhaust gases containing nitrogen oxides (NOx) and hydrocarbons (HC), wherein an SCR system comprising an SCR catalytic converter (3) and an injection device (1) for reducing agents is arranged upstream of an oxidation catalytic converter (4), wherein the SCR catalytic converter contains a copper (Cu)- and iron (Fe)-exchanged zeolite, and the zeolite is constructed in such a way that the hydrocarbons contained in the exhaust gas are kept away from the active centers in the catalytic converter, where the conversions take place, by the molecular sieve-like effect of the zeolite, wherein the zeolite has a maximum lower channel width of 0.26 nm to 0.42 nm (2.6 A to 4.2 A).

2. Arrangement according to claim 1, **characterized in that** the zeolite is selected from the group consisting of ferrierite, chabazite, and erionite.

3. Arrangement according to claim 1 and/or 2, **characterized in that** the zeolite is chabazite.

4. Arrangement according to one or more of claims 1 through 3, **characterized in that** the zeolite has a molar ratio of SiO₂ to Al₂O₃ in the range of 5 to 100.

5. Arrangement according to one or more of claims 1 through 4, **characterized in that** the zeolite has a molar ratio of SiO₂ to Al₂O₃ in the range of 10 to 60.

6. Arrangement according to one or more of claims 1 through 5, **characterized in that** the zeolite has a molar ratio of SiO₂ to Al₂O₃ in the range of 15 to 45.

7. Arrangement according to one or more of claims 1 through 6, **characterized in that** the content of Cu ions and Fe ions in the zeolite is 0.1 to 10 wt% Cu ions and Fe ions, relative to the weight of the zeolite.

8. Arrangement according to one or more of claims 1 through 7, **characterized in that** the content of Cu ions and Fe ions in the zeolite is 1 to 8 wt% Cu ions and Fe ions, relative to the weight of the zeolite.

9. Arrangement according to one or more of claims 1 through 8, **characterized in that** the content of Cu ions and Fe ions in the zeolite is 1.5 to 6 wt% Cu ions and Fe ions, relative to the weight of the zeolite.

10. Arrangement according to one or more of claims 1 through 9, **characterized in that** the SCR system comprises an SCR catalytic converter and an injection device for reducing agents upstream of an oxidation catalytic converter and a particulate filter.

11. Arrangement according to claim 10, **characterized in that** the particulate filter is coated.

12. Method for treating diesel motor exhaust gases containing nitrogen oxides (NOₓ) and hydrocarbons (HC), comprising:
a) the addition of ammonia (NH₃) as such, or of a precursor compound, from a source that does not belong to the exhaust gas train, which decomposes into ammonia, into the exhaust gas flow containing nitrogen oxides and hydrocarbons; and
b) the selective conversion of NOx with the NH₃ added to the exhaust gas flow at an arrangement according to one or more of claims 1 through 11.

13. Method according to claim 12, **characterized in that** the hydrocarbon content in the exhaust gas is at least 50 ppm before the conversion of NOx according to step b).

14. Method according to claim 12 and/or 13, **characterized in that** the hydrocarbon content in the exhaust gas exhibits temporary peak values of at least 300 ppm before the conversion of NOx according to step b).

## Revendications

1. Dispositif pour le traitement de gaz d'échappement de moteurs Diesel contenant des oxydes d'azote (NOₓ) et des hydrocarbures (HC), dans lequel un système SCR constitué par un catalyseur SCR (3) et un dispositif d'injection (1) d'agents réducteurs est installé devant un catalyseur d'oxydation (4), dans lequel le catalyseur SCR contient une zéolithe échangée avec du cuivre (Cu) et du fer (Fe) et la zéolithe est configurée de telle manière que les hydrocarbures contenus dans les gaz d'échappement sont tenus à l'écart des centres actifs sur lesquels les réactions se produisent dans le catalyseur, par l'effet de tamis moléculaire exercé par la zéolithe et dans lequel la plus grande dimension de canal inférieure de la zéolithe est comprise entre 0,26 nm et 0,42 nm (2,6 Å - 4,2 Å).

2. Dispositif selon la revendication 1, **caractérisé en ce que** la zéolithe est sélectionnée parmi le groupe constitué par la ferriérite, la chabazite et l'érionite.

3. Dispositif selon la revendication 1 et/ou 2, **caractérisé en ce que** la zéolithe est de la chabazite.

4. Dispositif selon une ou plusieurs des revendications 1 à 3, **caractérisé en ce que** la zéolithe a un rapport molaire de SiO₂ à Al₂O₃ qui se situe dans la plage de 5 à 100.

5. Dispositif selon une ou plusieurs des revendications 1 à 4, **caractérisé en ce que** la zéolithe a un rapport molaire de SiO₂ à Al₂O₃ qui se situe dans la plage de 10 à 60.

6. Dispositif selon une ou plusieurs des revendications 1 à 5, **caractérisé en ce que** la zéolithe a un rapport molaire de SiO₂ à Al₂O₃ qui se situe dans la plage de 15 à 45.

7. Dispositif selon une ou plusieurs des revendications 1 à 6, **caractérisé en ce que** la teneur en ions de Cu et en ions de Fe dans la zéolithe est de 0,1 à 10 % en poids d'ions de Cu et d'ions de Fe par rapport au poids de la zéolithe.

8. Dispositif selon une ou plusieurs des revendications 1 à 7, **caractérisé en ce que** la teneur en ions de Cu et en ions de Fe dans la zéolithe est de 1 à 8 % en poids d'ions de Cu et d'ions de Fe par rapport au poids de la zéolithe.

9. Dispositif selon une ou plusieurs des revendications 1 à 8, **caractérisé en ce que** la teneur en ions de Cu et en ions de Fe dans la zéolithe est de 1,5 à 6 % en poids d'ions de Cu et d'ions de Fe par rapport au poids de la zéolithe.

10. Dispositif selon une ou plusieurs des revendications 1 à 9, **caractérisé en ce que** le système SCR constitué d'un catalyseur SCR et d'un dispositif d'injection d'agents réducteurs est installé devant un catalyseur d'oxydation et un filtre à particules.

11. Dispositif selon la revendication 10, **caractérisé en ce que** le filtre à particules est revêtu.

12. Procédé de traitement de gaz d'échappement de moteurs Diesel contenant des oxydes d'azote (NOₓ) et des hydrocarbures (HC), comprenant :
a) l'ajout d'ammoniac (NH₃) en tant que tel ou d'un composé précurseur qui peut se décomposer en ammoniac et qui provient d'une source qui ne fait pas partie de la ligne de gaz d'échappement dans le flux de gaz d'échappement contenant des oxydes d'azote et des hydrocarbures ; et
b) la conversion sélective de NOₓ avec le NH₃ ajouté au flux de gaz d'échappement dans un dispositif selon l'une ou plusieurs des revendications 1 à 11.

13. Procédé selon la revendication 12, **caractérisé en ce que** la teneur en hydrocarbures dans les gaz d'échappement avant la conversion de NOₓ selon l'étape b) atteint au minimum 50 ppm.

14. Procédé selon la revendication 12 et/ou 13, **caractérisé en ce que** la teneur en hydrocarbures dans les gaz d'échappement avant la conversion de NOₓ selon l'étape b) atteint des valeurs maximales de brève durée d'au moins 300 ppm.
